(19) Europäisches Patentamt
European Patent Office
Office européen des brevets

(11) EP 4 112 262 A1

(12) EUROPEAN PATENT APPLICATION

(43) Date of publication:
**04.01.2023 Bulletin 2023/01**

(21) Application number: **21182668.0**

(22) Date of filing: **30.06.2021**

(51) International Patent Classification (IPC):
***B29B 15/12*** $^{(2006.01)}$ ***B29C 70/52*** $^{(2006.01)}$

(52) Cooperative Patent Classification (CPC):
**B29B 15/122; B29C 70/525;** B29K 2075/00

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventor: **The designation of the inventor has not yet been filed**

(74) Representative: **Levpat**
**c/o Covestro AG**
**Gebäude K12**
**51365 Leverkusen (DE)**

(54) **A PROCESS FOR PREPARING A PULTRUDED POLYURETHANE COMPOSITE**

(57) The present invention relates to an automatic control method and an apparatus for preparing the pultruded polyurethane composite with the polyurethane pultrusion, the pultruded polyurethane composite produced by said method and use thereof.

Fig. 1

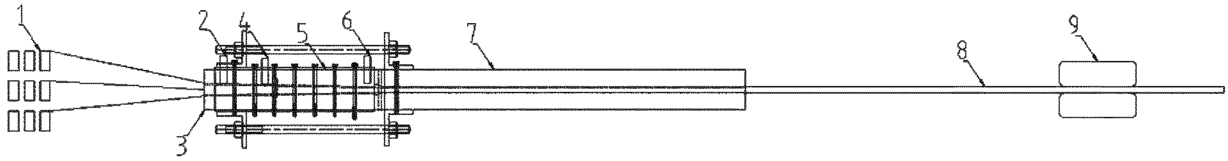


EP 4 112 262 A1

## Description

### Technical Field

The present invention relates to the field of the polyurethane pultrusion process. Specifically, the present invention relates to a process and an apparatus for preparing a pultruded polyurethane composite with an automatic control method.

### Background technology

The traditional pultrusion process mainly adopts an open-bath, namely, fibers, fabrics or felts pass through a resin-bath with a compression roller or a compression bar, the fibers with resin are stepwisely extruded by a preformed plate and then enter a heated mold, and are finally solidified and shaped. There are some problems for the traditional open-bath process, for example, a high VOC volatilization, a higher resin waste rate, and a high porosity content of the finished product, and the resin system with a short gelation time is not applicable to this process too. The time required for the shutdown and the product specification replacement is relatively long and the cost is relatively high.

In order to solve the above problems, two close-type resin-injection processes are tried in the industry. One process is based on a low-pressure resin-injection mode, there are usually one or more tapering degrees inside this resin-injection box, its resin-injection holes are generally located on the upper and lower of the injection box. The resin is injected into the - injection box by means of an injection machine to infiltrate the unidirectional rovings. This type of the injection box is suitable for the all rovings pultrusion. The other process is based on a high-pressure injection box, its injection holes are generally located on the upper and lower of the injection box, and this type of the injection box is suitable for plies with porous structures such as felt or fabric. The amount of the resin in the above-mentioned infiltration device is generally controlled by manually observing whether the resin is leaking at the inlet of the injection box. The problems of the continuous resin exposure to waste the resin or the poor infiltration due to too little resin in the injection box often occur. In the actual production process, the pultrusion production speed may change in real time. If the process parameter is not adjusted in time, it is very easy to cause the resin waste or the poor infiltration, thereby affecting the production.

CN109986810A discloses a centralized feeding device and a composite pultrusion apparatus comprising the same. The centralized feeding device comprises at least one group of centralized feeding assembly, each group of the centralized feeding assembly is used for providing a material for a pultrusion traction device, and each group of the centralized feeding assembly comprises a material storage barrel used for storing materials to be transported; a temporary storage barrel that is connected with the material storage barrel through transportation pipelines and used for temporarily storing materials to be injected; a material injection assembly and the like.

CN209869449U discloses an automatic production apparatus for a composite pultrusion sectional material. The automatic production apparatus comprises a fiber yarn storage device, which is used for storing the fiber yarn; a fiber yarn guiding device, which is used for guiding the fiber yarns guided out by the fiber yarn storage device; a pultrusion mold device, which is used for achieving the heating and shaping of the sectional material; an injection device, which is used for injecting materials into the injection material box and/or the pultrusion mold; a clamping traction device, which is used for realizing the clamping traction of the sectional material; a dust collection and cutting device, which is used for achieving the dust collection and the cutting of the sectional material; and a central control device, which is used for realizing the automatic control of the aforementioned devices.

Despite the above disclosures, there is still an urgent need for an improved technological process and an apparatus applicable thereto, which meet the needs of industrial production.

### Summary of the Invention

One aspect of the present invention is to provide an automatic control method for preparing a pultruded polyurethane composite, comprising:

Injecting a polyurethane composition into an infiltration box (5) with a resin-injection system (30) to form a liquid level;

Acquiring liquid level information of the polyurethane composition in said infiltration box (5);

Transmitting said liquid level information to said resin-injection system (30) and/or a control system (40);

Adjusting a process parameter according to said liquid level information, wherein said process parameter comprises resin-injection velocity, resin-injection amount, formula, temperature and the like, preferably resin-injection velocity

or resin-injection amount. Said resin-injection velocity refers to a velocity at which the polyurethane composition is injected, for example, 30 grams per minute (g/min). Said resin-injection amount refers to the amount of the polyurethane composition injected, for example, in volume or in weight.

Preferably, said liquid level information comprises the liquid level information at two or more than two different acquiring positions.

Preferably, the positions for acquiring said liquid level information are the acquiring position 1 (2) and the acquiring position 2 (4).

Preferably, said infiltration box (5) comprises an inlet (5a) and an outlet (5b), the straight-line distance between said acquiring position 1 (2) and said inlet (5a) is 0-100 mm, the straight-line distance between said acquiring position 2 (4) and said inlet (5a) is 110-300 mm, preferably 120-250 mm, more preferably 130-200 mm.

Preferably, the method also comprises: pre-storing a plurality of correspondences between historical liquid level information and historical process parameter, and adjusting the process parameter according to the acquired liquid level information and said correspondence between historical liquid level information and historical process parameter.

Preferably, the length of said infiltration box (5) is 300-800 mm, preferably 350-700 mm, more preferably 400-650 mm.

Preferably, said liquid level information is acquired from at least one sensor, preferably acquired from two sensors.

Preferably, said sensor is selected from a contact sensor, an infrared sensor, an ultrasonic sensor or a combination thereof.

Preferably, a process for preparing the pultruded polyurethane composite comprising said automatic control method for preparing the pultruded polyurethane composite, compared to a process for preparing the pultruded polyurethane composite not comprising said automatic control method for preparing the pultruded polyurethane composite, has a reduction of ≥1%, preferably≥2%, more preferably≥3% in the used amount of the polyurethane composition.

Preferably, the inlet (5a) and the outlet (5b) of said infiltration box (5) both comprise cross sections, the cross section area ratio of the inlet (5a) to the outlet (5b) of said infiltration box (5) is 2:1-8:1, preferably 3:1-8:1. Specifically, assuming the cross section area of the inlet is Ai, and the cross section area of the outlet is Ao, then Ai:Ao is 2:1-8:1, preferably 3:1-8:1.

Preferably, the method also comprises acquiring the temperature information in the infiltration box (5), and transmitting said temperature information to a resin-injection system (30) and/or a control system (40), and the resin-injection system (30) and/or the control system (40) adjusting the process parameter, preferably a resin-injection temperature, according to said temperature information.

Preferably, the method also comprises:

Placing at least one peel ply (2a, 2b) and at least one fiber-reinforced material (1) in an infiltration box (5) including one inlet (5a) and one outlet (5b); wherein, said peel ply (2a, 2b) partly covers said fiber-reinforced material (1);

Infiltrating said fiber-reinforced material (1) with a polyurethane composition through a part of the fiber-reinforced material (1) that is not covered by the peel ply (2a, 2b);

Pulling the infiltrated fiber-reinforced material (1) and the peel ply (2a, 2b) through a mold (7), solidifying and shaping to produce said pultruded polyurethane composite.

Preferably, said at least one peel ply (2a, 2b) is two pieces of the peel ply (2a, 2b), said two pieces of the peel ply (2a, 2b) are placed on two opposite inner sides (5i, 5j) of the infiltration box (5) respectively, and said fiber-reinforced material (1) is located between the two pieces of the peel ply (2a, 2b).

Said peel ply does not completely cover the fiber-reinforced material, but only partly covers the fiber-reinforced material. The polyurethane composition contacts with the fiber-reinforced material through the part that is not covered by the peel ply, and infiltrates the fiber-reinforced material.

Preferably, said at least one peel ply (2a, 2b) is two pieces of the peel ply (2a, 2b), said two pieces of the peel ply (2a, 2b) are placed on two opposite inner sides (5i, 5j) of the infiltration box (5) respectively, said fiber-reinforced material (1) is located between the two pieces of the peel ply (2a, 2b), said resin-injection system (30) comprises at least two resin-injection ports (4a, 4b), and said two resin-injection ports (4a, 4b) are located on two opposite sides (5m, 5n) of the infiltration box (5) where no peel ply is placed.

Preferably, the method also comprises mixing the polyurethane composition by using an autometering and mixing device.

Preferably, said polyurethane composition comprises the following components:

Component A, comprising one or more organic polyisocyanates;

Component B, comprising:

B1) one or more organic polyols, wherein the content of said polyol is 21-60wt%, preferably 21-40wt%, based on 100wt% of the total weight of said polyurethane composition;

B2) based on 100wt% of the total weight of said polyurethane composition, one or more compounds having the structure of formula (I) having a content of 0-35wt%, preferably 4.6-35wt%:

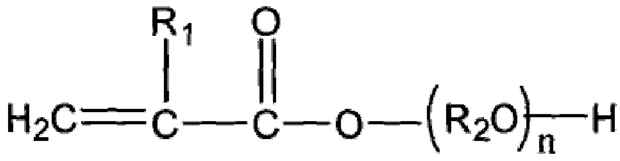

I

Wherein, $R_1$ is selected from hydrogen, methyl or ethyl; $R_2$ is selected from an alkylene group having 2-6 carbon atoms, 2,2-bis(4-phenylene)-propane, 1,4-bis(methylene)benzene, 1,3-bis(methylene)benzene, 1,2-bis(methylene)benzene; n is an integral number selected from 1-6; and

Component C, a free-radical initiator.

Preferably, the organic polyol has a functionality of 1.7-6, preferably 1.9-4.5 and a hydroxyl value of 150-1100 mg KOH/g, preferably 150-550 mg KOH/g.

Preferably, the component B2) is selected from: hydroxyethyl methacrylate, hydroxypropyl methacrylate, hydroxybutyl methacrylate, hydroxyethyl acrylate, hydroxypropyl acrylate, hydroxybutyl acrylate or a combination thereof.

Preferably, said polyurethane composition has the gelation time at 25 °C of 10-40 minutes, preferably 15-30 minutes, more preferably 16-28 minutes.

According to the invention, fiber-reinforced material means a fibrous material which is suitable for reinforcing another material such as a polyurethane. Preferably, said fiber-reinforced material (1) is selected from glass fiber, carbon fiber, polyester fiber, natural fiber, aromatic polyamide fiber, nylon fiber, basalt fiber, boron fiber, silicon carbide fiber, asbestos fiber, metal fiber or a combination thereof.

Preferably, the method also comprises pulling the infiltrated fiber-reinforced material (1) through a mold (7), the velocity of said fiber-reinforced material (1) passing through the mold (7) is 0.2-2 m/min, preferably 0.2-1.5 m/min, and said polyurethane composition is injected from a resin-injection system (30) into said infiltration box (5) at a velocity of 30-2000 g/min, preferably 40-1500 g/min, more preferably 60-1200 g/min.

The automatic control method for preparing the pultruded polyurethane composite of the present invention simply, efficiently and objectively realizes the collection, treatment and application of the process information such as the liquid level information, the temperature information and the like of a pultrusion production line, can ensure the good infiltration of a fiber-reinforced material, and simultaneously does not waste a polyurethane composition raw material, and is economical and environment-friendly.

In addition, the process for preparing the pultruded polyurethane composite of the present invention uses a continuous pultrusion process, in which the peel ply and the fiber-reinforced material are pulled to pass through the infiltration box at a certain velocity, the polyurethane composition is injected into the infiltration box through the resin-injection device to infiltrate said fiber-reinforced material, preferably, a polyurethane composition is injected via a part of the fiber-reinforced material (1) not covered by the peel ply and infiltrates said fiber-reinforced material (1). Surprisingly, the method of the present invention, which includes the characteristics such as the peel ply, the proper resin-injection position, the infiltration method, the traction velocity, and the velocity of injecting the polyurethane composition, not only provides a high quality pultruded polyurethane composite having a satisfactory surface, but also improves the production efficiency and saves the cost.

Another aspect of the present invention is to provide a device for the automatic control method for preparing the pultruded polyurethane composite, comprising:

A resin-injection system (30), an infiltration box (5) comprising an inlet (5a) and an outlet (5b) and at least one information-acquiring device (2, 4).

Preferably, said at least one information-acquiring device (2, 4) is at least two information-acquiring devices (2, 4), an information-acquiring device 1 (2) is placed above the infiltration box (5) and at a position having a straight-line distance from the inlet (5a) of said infiltration box (5) of 0-100 mm, and an information-acquiring device 2 (4) is placed above the infiltration box (5) and at a position having a straight-line distance from the inlet (5a) of said infiltration box (5) of 110-300 mm, preferably 120-250 mm, more preferably 130-200 mm.
Preferably, it also comprises at least one temperature information acquiring device (6).
Preferably, it also comprises at least one control system (40) for receiving the information, processing the information and adjusting the process parameter.
Preferably, said resin-injection system (30) comprises at least two resin-injection ports (4a, 4b) located at two opposite sides (5m, 5n, 5i, 5j) of the infiltration box (5).
Preferably, said infiltration box (5) is a cuboid, and said resin-injection ports (4a, 4b) are located at two sides (5m, 5n) perpendicular to the travelling direction of the fiber-reinforced material (1).
In a further aspect of the present invention, there is provided a process for preparing the pultruded polyurethane composite, comprising the automatic control method for preparing the pultruded polyurethane composite as aforementioned in the present invention.
Said automatic control method for preparing the pultruded polyurethane composite comprises:

Injecting a polyurethane composition into an infiltration box (5) with a resin-injection system (30) to form a liquid level;

Acquiring liquid level information of the polyurethane composition in said infiltration box (5);

Transmitting said liquid level information to said resin-injection system (30) and/or a control system (40);

Adjusting a process parameter, preferably the resin-injection amount, according to said liquid level information.

Preferably, said liquid level information comprises the liquid level information at two or more than two different positions.
Preferably, the positions for acquiring said liquid level information are the acquiring position 1 (2) and the acquiring position 2 (4), respectively.
Preferably, said infiltration box (5) comprises an inlet (5a), the straight-line distance between said acquiring position 1 (2) and said inlet (5a) is 0-100 mm, the straight-line distance between said acquiring position 2 (4) and said inlet (5a) is 110-300 mm, preferably 120-250 mm, more preferably 130-200 mm.
Preferably, said automatic control method also comprises: pre-storing a plurality of correspondences between historical liquid level information and historical process parameter, and adjusting the process parameter according to the acquired liquid level information and said correspondence between historical liquid level information and historical process parameter.
Preferably, said process for preparing a pultruded polyurethane composite comprising the automatic control method, compared to the process for preparing the pultruded polyurethane composite not comprising the automatic control method, has a reduction of ≥ 1%, preferably≥ 2%, more preferably≥ 3% in the used amount of the polyurethane composition. Said automatic control method is the automatic control method for preparing the pultruded polyurethane composite of the present invention.
In a further aspect of the present invention, there is provided a polyurethane product, comprising the polyurethane composite of the present invention.
Preferably, the polyurethane product is selected from: cable trays, frames of doors, windows and curtain walls, frames of ladders, tent poles or pipes, anti-glare shields, floors, sucker rods, telegraph poles and cross arms, guardrails, gratings, architectural sectional materials, container sectional materials and plates, bike racks, fishing rods, cable cores, insulator core rods, antenna housings, single-layer or sandwiched continuous plates or sheet materials for producing main spars of the turbine fan blade.
We have surprisingly found through repeated experiments that the process for preparing the pultruded polyurethane composite including the automatic control method of the present invention can economically, simply and efficiently prepare the pultruded polyurethane composite with the non-smooth or rough surface that has the satisfactory quality and meets the requirements. Particularly for the fiber-reinforced materials with certain thickness, the process of the present invention can realize good infiltration and simultaneously can prepare the pultruded polyurethane composite with satisfactory surface properties. It can also save raw materials and economize manpower and material resources, thereby being more economic and environment-friendly.
The process for preparing the polyurethane composite by the polyurethane pultrusion process of the present invention adopts the above-mentioned polyurethane composition, and skillfully designs the resin-injection device and the infiltration box which are applicable thereto. With the appropriate method, not only the pultruded polyurethane

composite with excellent quality is prepared, but also the surface condition of the pultruded polyurethane composite is improved, raw materials, manpower and material resources are saved, the production efficiency is enhanced, and the cost is saved.

Moreover, the polyurethane composition of the present invention has a longer gelation time, so that a better polyurethane pultrusion can be achieved. The polyurethane composite of the present invention has good physical properties and a high glass fiber content.

In addition, the polyurethane composition of the present invention has a shorter curing time and a longer gelation time, and can be suitable for preparing a pultruded polyurethane composite, in particular a large-scale pultruded polyurethane composite, for example, a sectional material of spar cap of the wind blade, in a more flexible manner and in a better way (for example, can be infiltrated and shaped for a longer time). In particular, the fibre-reinforced material can be infiltrated and shaped for a longer time and in a better way at an ordinary temperature, for example before entering the mold, and can be more rapidly cured at a higher temperature, for example after entering the mold.

Detailed description of the invention

The specific embodiments for implementing the present invention will be described below.

The automatic control method for preparing the pultruded polyurethane composite comprises:

Injecting a polyurethane composition into an infiltration box (5) with a resin-injection system (30) to form a liquid level;

Acquiring liquid level information of the polyurethane composition in said infiltration box (5);

Transmitting said liquid level information to said resin-injection system (30) and/or a control system (40);

Adjusting a process parameter, preferably the resin-injection amount, according to said liquid level information.

Preferably, said liquid level information comprises the liquid level information at two or more than two different positions.

Preferably, the positions for acquiring said liquid level information are the acquiring position 1 (2) and the acquiring position 2 (4), respectively.

Preferably, said infiltration box (5) comprises an inlet (5a), the straight-line distance between said acquiring position 1 (2) and said inlet (5a) is 0-100 mm, the straight-line distance between said acquiring position 2 (4) and said inlet (5a) is 110-300 mm, preferably 120-250 mm, more preferably 130-200 mm.

Preferably, the method also comprises: pre-storing a plurality of correspondences between historical liquid level information and historical process parameter, and adjusting the process parameter according to the acquired liquid level information and said correspondence between historical liquid level information and historical process parameter.

Preferably, the length of said infiltration box (5) is 300-800 mm, preferably 350-700 mm, more preferably 400-650 mm.

Preferably, said liquid level information is acquired from at least one sensor, preferably acquired from two sensors.

Preferably, said sensor is selected from a contact sensor, an infrared sensor or an ultrasonic sensor or a combination thereof.

In some embodiments of the present invention, as shown in Fig. 6, the automatic control method of the present invention comprises the steps of: the liquid level information in the infiltration box is measured in step S11. In step S12, it is determined whether the liquid level information conforms to the requirements based on a conversion relationship, which is formed based on the historical data of the liquid level information and the process parameter. In step S13, a process parameter is adjusted according to the obtained liquid level information. In step S11, for example, the liquid level information of at least two different positions in the infiltration box is first measured, and for example, specifically the liquid level information and the temperature information at a designated position can be measured by using a sensor.

In a preferred embodiment of the present invention, as shown in Fig. 7, the resin-injection system 30 includes one or more sensors 301, a computing unit 302, and a transmitting unit 303, wherein the one or more sensors 301 are configured to measure information such as the liquid level information and the temperature information on the polyurethane composite production line, for example, the sensor 301 can be specifically utilized to measure the liquid level information and/or the temperature information at one or more positions in the infiltration box.

In some embodiments of the present application, as shown in Fig. 8, the control system 40 further specifically includes a receiving unit 401 and an adjusting unit 402, wherein the receiving unit 401 is configured to receive the liquid level information, and the adjusting unit 402 is configured to adjust the parameters of the control system 40 according to the liquid level information. The receiving unit 401 can receive the liquid level information reported from the resin-injection system 30 and send it to the adjusting unit 402, and then the adjusting unit 402 adjusts the parameters of the control system 40 according to the liquid level information. In particular, the adjusting unit 402 may send an instruction to adjust the parameters of the control system 40 according to the difference between the measured liquid level information and the required liquid level information, the instructions are sent to various execution components (not shown) of the control system 40, so that the measured liquid level information approaches or even equals to the required liquid level information. For example, if the measured liquid level information cannot reach the production requirement, now the adjusting unit 402 may send instructions to adjust the parameters of the control system 40.

In some embodiments of the present application, the parameters that can be adjusted include the formula parameter and the process parameter. The formula parameter comprises the raw material proportion, specifically the amounts of the components of the polyurethane composition, and the process parameter comprises one or more of the temperature of the resin/composition, the resin-injection velocity, the resin-injection amount and the feeding velocity of the fiber-reinforced material. For example, the adjusting unit 402 may send an instruction to a precision pump (e.g., a piston pump, a gear pump) to adjust the composition, the injection amount of the resin, or may send an instruction to a conveyor motor to adjust the feeding velocity of the fiber-reinforced material.

Preferably, said polyurethane composition comprises the following components:

Component A, comprising one or more organic polyisocyanates;

Component B, comprising:

B1) one or more organic polyols, wherein the content of said polyol is 21-60wt%, preferably 21-40wt%, based on 100wt% of the total weight of said polyurethane composition;

B2) based on 100wt% of the total weight of said polyurethane composition, one or more compounds having the structure of formula (I) having a content of 0-35wt%, preferably 4.6-35wt%:

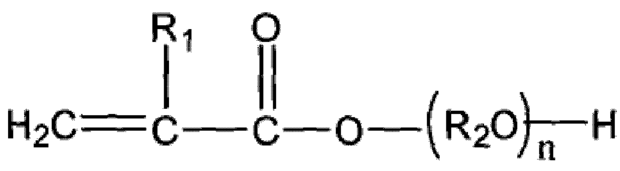

I

Wherein, R1 is selected from hydrogen, methyl or ethyl; R2 is selected from an alkylene group having 2-6 carbon atoms, 2,2-bis(4-phenylene)-propane, 1,4-bis(methylene)benzene, 1,3-bis(methylene)benzene, 1,2-bis(methylene)benzene; n is an integral number selected from 1-6; and

Component C, a free-radical initiator.

When used in the present invention, the shape and the size of the fiber-reinforced material is not limited and for example it may be a continuous fiber, a fiber web formed by bonding, or a fiber fabric.

In some embodiments of the present invention, the fiber-reinforced material is selected from glass fiber, carbon fiber, polyester fiber, natural fiber, aromatic polyamide fiber, nylon fiber, basalt fiber, boron fiber, silicon carbide fiber, asbestos fiber, crystal whisker, metal fiber or a combination thereof.

Optionally, the organic polyisocyanate may be any aliphatic, alicyclic, or aromatic isocyanate known to be used in the preparation of polyurethanes. The isocyanate that can be used in the present invention has the functionality of preferably 2.0-3.5, particularly preferably 2.1-2.9. The isocyanate has a viscosity of preferably 5-700 mPa·s, particularly preferably 10-300 mPa·s measured at 25 °C according to DIN53019-1-3.

When used in the present invention, the organic polyisocyanate comprises isocyanate dimer, trimer, tetramer, pentamer or a combination thereof.

In a preferred embodiment of the present invention, the isocyanate component A) is selected from diphenylmethane diisocyanate (MDI), polyphenylmethane polyisocyanate (pMDI), and their polymers, prepolymers or a combination thereof.

Blocked-isocyanate may be also used as isocyanate component A), which may be prepared from the reaction of an excessive amount of an organic polyisocyanate or a mixture of organic polyisocyanates with a polyol compound.

Those of ordinary skill in the art are familiar with these compounds and their preparation methods.

The polyurethane composition of the present invention contains one or more organic polyols B1). The content of the organic polyol is 21-60wt%, based on 100wt% of the total weight of said polyurethane composition. The organic polyol can be an organic polyol conventionally used in the art for preparing a polyurethane, which comprises, but is not limited to a polyether polyol, a polyether carbonate polyol, a polyester polyol, a polycarbonate diol, a polymer polyol, a vegetable oil-based polyol or a combination thereof.

The polyether polyol can be prepared by known processes, for example, obtained by reacting an olefin oxide with a starter in the presence of a catalyst.

The polyether carbonate polyol may also be used in the present invention. The polyether carbonate polyol can be prepared by adding carbon dioxide and alkylene oxide on an active hydrogencontaining starter by using a double metal cyanide catalyst.

Said polyester polyol is prepared by reacting dicarboxylic acid or dicarboxylic anhydride with polyol.

Those skilled in the art are familiar with the methods for measuring the hydroxyl value, such as those disclosed in Houben Weyl, Methoden der Organischen Chemie, vol. XIV/2 Makromolekulare Stoffe, p.17, Georg Thieme Verlag; Stuttgart 1963. The entire contents of this document are incorporated herein by reference.

When used in the present invention, unless otherwise specified, the functionality and the hydroxyl value of the organic polyol refer to the average functionality and the average hydroxyl value.

Optionally, the polyurethane composition of the present invention further contains one or more compounds B2) having the structure of formula (I)

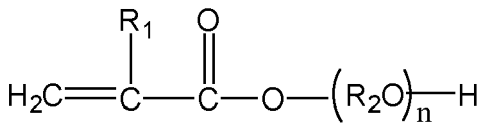

I ,

Wherein, $R_1$ is selected from hydrogen, methyl or ethyl; $R_2$ is selected from an alkylene group having 2-6 carbon atoms; n is an integral number selected from 1-6.

In a preferred embodiment of the present invention, $R_2$ is selected from ethylene, propylene, butylene, pentylene, 1-methyl-1,2-ethylene, 2-methyl-1,2-ethylene, 1-ethyl-1,2-ethylene, 2-ethyl-1,2-ethylene, 1-methyl-1,3-propylene, 2-methyl-1,3-propylene, 3-methyl-1,3-propylene, 1-ethyl-1,3-propylene, 2-ethyl-1,3-propylene, 3-ethyl-1,3-propylene, 1-methyl-1,4-butylene, 2-methyl-1,4-butylene, 3-methyl-1,4-butylene and 4-methyl-1,4-butylene, 2,2-bis(4-phenylene)-propane, 1,4-dimethylenebenzene, 1,3-dimethylenebenzene, 1,2-dimethylenebenzene.

Preferably, said B1) is selected from an organic polyol, wherein the organic polyol is selected from those having the functionality of 1.7-6, preferably 1.9-4.5, and the hydroxyl value of 150-1100 mg KOH/g, preferably 150-550 mg KOH/g.

In a preferred embodiment of the present invention, the component B2) is selected from: hydroxyethyl methacrylate, hydroxypropyl methacrylate, hydroxybutyl methacrylate, hydroxyethyl acrylate, hydroxypropyl acrylate, hydroxybutyl acrylate or a combination thereof.

The compound of formula (I) may be prepared by conventional methods in the art, for example may be prepared by the esterification reaction of (meth)acrylic anhydride or (meth)acrylic acid, (meth)acryloyl halide compounds and $HO-(R_2O)_nH$. Those skilled in the art are familiar with these preparation methods, for example, as explained in "Manual of Polyurethane Raw Materials and Additives" (Liu Yijun, published on 1st April 2005), Chapter III, and "Polyurethane Elastomer" (Liu Houjun, published in August 2012), Chapter II, and CN104974502A. The entire contents of these documents are incorporated herein by reference.

Preferably, the polyurethane composition of the present invention further contains C) free radical reaction initiator. The free radical initiator that is used in the present invention may be added to the polyol component or an isocyanate component, or can be added to both components. It specifically can include tert-butyl peroxy isopropyl carbonate, tert-butyl peroxy-3,5,5-trimethylhexanoate, methylethyl ketone peroxide, cumene hydroperoxide and the like. Preferably, the content of the free radical reaction initiator of the present invention is 0.1-8wt%, based on 100wt% of the total weight of the polyurethane composition of the present invention. In addition, an accelerator, such as a cobalt compound or an amine compound, may be present.

Optionally, the polyurethane composition may also contain a catalyst for catalyzing the reaction of an isocyanate group (NCO) and a hydroxyl group (OH). An appropriate catalyst for the polyurethane reaction is preferably, but not limited to an amine catalyst, an organometallic catalyst, or a mixture thereof. Preferably, the used amount of the catalyst is 0.001-10wt%, based on 100wt% of the total weight of the polyurethane composition of the present invention.

In an embodiment of the present invention, in the addition polymerization reaction of an isocyanate group with

a hydroxyl group, the isocyanate group can be an isocyanate group contained in the organic polyisocyanate (component A), or an isocyanate group contained in the intermediate product of the reaction of the organic polyisocyanate (component A) and the organic polyol (B1) component) or B2) component, the hydroxy group can be a hydroxy group contained in the organic polyol (B1) component) or B2) component, or a hydroxy group contained in the intermediate product of the reaction of the organic polyisocyanate (component A) and the organic polyol (B1) component) or B2) component.

In an embodiment of the present invention, the free radical polymerization reaction is an addition polymerization reaction of olefinic bonds, wherein the olefinic bonds may be an olefinic bond contained in B2) component or an olefinic bond contained in the intermediate product of the reaction of B2) component and the organic polyisocyanate.

In an embodiment of the present invention, the polyurethane addition polymerization reaction (i.e., an addition polymerization reaction of the isocyanate group and the hydroxyl group) is simultaneously performed with the free radical polymerization reaction. It is well known to those skilled in the art that suitable reaction conditions can be selected so that the polyurethane addition polymerization reaction and the free radical polymerization reaction are performed successively, however the polyurethane matrix thus prepared has a different structure than the polyurethane resin matrix prepared where the polyurethane addition polymerization reaction and the free radical polymerization reaction are performed simultaneously; and thereby the prepared polyurethane composites have different mechanical properties and manufacturabilities.

Optionally, the above-mentioned polyurethane composition can also contain auxiliaries or additives.

The internal release agent that can be used in the present invention comprises any conventional release agent used for producing polyurethanes, and examples thereof include long-chain carboxylic acids, particularly fatty acids such as stearic acid, amines of long-chain carboxylic acids such as stearic amide, fatty acid esters, metal salts of long-chain carboxylic acids, such as zinc stearate, or polysiloxanes.

Examples of flame retardants that can be used in the present invention include triaryl phosphates, trialkyl phosphates, triaryl phosphates or trialkyl phosphates with halogen, melamine, melamine resins, halogenated paraffins, red phosphorus, or combinations thereof.

Other adjuvants that can be used in the present invention include water-removing agents such as molecular sieves; defoamers such as polydimethyl siloxane; coupling agents such as monoethylene oxide or organic amine functionalized trialkoxysilane or combinations thereof. Coupling agents are particularly preferably for improving the adhesion of the resin matrix to the fiber-reinforced material. Fine particle fillers, such as clay and fumed silica, are commonly used as thixotropic agent.

The free radical reaction suppressant that can be used in the present invention comprises a polymerization inhibitor and a polymerization retarder, and the like, for example, some phenols, quinone compounds or hindered amine compounds. Examples thereof include methyl hydroquinone, p-methoxyphenol, benzoquinone, polymethyl pyridine derivatives, low-valent copper ions, and the like.

We have surprisingly found through repeated experiments that the process for preparing the pultruded polyurethane composite of the present invention can simply and efficiently control the production process, so that the pultruded polyurethane composite with the required rough surface and the satisfactory quality can be prepared in a better way. The resin-injection device and the infiltration box with special design that are applicable to the method of the present invention can infiltrate the fiber-reinforced material, especially the fiber material with certain thickness, in a shorter time and in a better way.

In addition, the polyurethane composition of the present invention has a shorter curing time and a longer gelation time, and can be suitable for preparing a pultruded polyurethane composite, in particular a large-scale pultruded polyurethane composite in a more flexible manner and in a better way (for example, can be infiltrated and shaped for a longer time). In particular, the fiber-reinforced material can be infiltrated and shaped for a longer time and in a better way at an ordinary temperature, for example before entering the mold, and can be more rapidly cured at a higher temperature, for example after entering the mold.

Unless defined otherwise, all technical and scientific terms used herein have the same meanings as commonly understood by those skilled in the art to which this invention belongs. To the extent that the definitions of terms used in this specification conflict with meanings commonly understood by those skilled in the art to which this invention belongs, the definitions set forth herein prevail.

The present invention is illustrated below by way of examples, but it should be understood that the scope of the present invention is not limited to these examples.

**Brief description of the drawings**

The invention is illustrated in the following description with reference to the accompanying drawings:

Fig. 1 represents a mold and process flow schematic view represented by the process for preparing the pultruded polyurethane composite with the pultrusion process according to the preferred embodiment of the present invention,

wherein: 1-fiber-reinforced material, 2-1# liquid level sensor or information acquiring position 1, 3-yarn guide plate, 4-2# liquid level sensor or information acquiring position 2, 5-infiltration box, 6-temperature sensor, 7-mold, 8-sectional material/pultruded polyurethane composite, 9-holding device.

Fig. 2 is a relative position diagram of the preferred infiltration box and resin-injection device/and peel ply of the present invention, wherein: 2a, 2b-peel ply (in order to avoid the figure being too complicated, the fiber-reinforced material which should be arranged between the two pieces of peel ply is not shown), 30-resin-injection apparatus/system, 4a, 4b-resin-injection port, 5 represents the infiltration box, 5a represents the inlet of the infiltration box, 5b represents the outlet of the infiltration box, 5m, 5n represent two opposite sides of the infiltration box (5) (5i and 5j are two up and down opposite sides, as shown in Fig. 3), and X represents the vertical distance between said resin-injection system (30) and the inlet (5a) of the infiltration box in the pultrusion direction.

Fig. 3 represents the front view of the preferred infiltration box of the present invention, wherein 5i and 5j respectively represent two up and down opposite sides of the infiltration box.

Fig. 4 is the cross-sectional view of the preferred infiltration box of the present invention, wherein 5 represents the infiltration box, 5a represents the inlet of the infiltration box, and 5b represents the outlet of the infiltration box.

Fig. 5 is an automatic control flowchart 200 of the preferred embodiment of the present invention, in which 22 represents a resin-injection machine, 201 represents-resin-injection (↓), 202 represents + resin-injection (↑), 203 represents resin-injection at the fixed frequency, 1# represents the sensor 1, 2# represents the sensor 2, Y represents Yes, and N represents No.

Fig. 6 illustrates the steps of the automatic control method according to the preferred embodiment of the present invention.

Fig. 7 shows a resin-injection system according to the preferred embodiment of the present invention.

Fig. 8 shows a control system according to the preferred embodiment of the present invention.

## Examples

Explanation of the performance parameter tests in examples of the present application: Functionality, refers to the numerical value determined according to the industry formula:

$$\text{functionality} = \text{hydroxyl value} * \text{molecular weight}/56100;$$

wherein the molecular weight is determined by the GPC high performance liquid chromatography;

Isocyanate index, refers to the numerical value calculated by the following formula:

$$\text{Isocyanate index (\%)} = \text{the mole number of isocyanate groups (NCO groups) in Component A/the mole number of isocyanate group-reactive groups in Component B} \times 100\%.$$

NCO content, refers to the content of the NCO groups in the system, and is measured according to GB/T12009 .4-2016.

The pultrusion rate/velocity, i.e. the speed at which the fiber-reinforced material is pulled through the mold, refers to the length of the pultruded fiber-reinforced material per minute through the mold, i.e. the length per minute at which the pultruded article is produced; its specific test method is as follows: the length of the pultruded fiber-reinforced material measured using a speed sensor or a stopwatch plus a ruler is divided by the time used to obtain the length through the mold per unit time, i.e. the pultrusion rate/velocity.

The curing time refers to the time period starting from mixing component A and component B of the reaction system until the curing.

The gelation time refers to the time period starting from mixing component A and component B of the reaction system until the viscosity reach a certain value (for example about 10000 mPa·s). The gelation time of the present invention is tested by using a gelation tester. The specific test method is as follows: mixing component A and component B uniformly, placing the mixture into the gelation tester, and recording the time period from pressing the turn-on button

until the gelation tester stops working as the gelation time. The gelation tester used in the present invention is selected from Shanghai SINO-LAB Instrument Co. Ltd. (Type GT-STHP-220).

## Source and description of raw materials

Table 1-Raw Material List

| Raw material/apparatus name | Specification/trademark | Supplier |
|---|---|---|
| Isocyanate | Desmodur 1511L | Covestro Polymer (China) Co. Ltd. |
| Polyol combination | Baydur 18BD209 | Covestro Polymer (China) Co. Ltd. |
| Internal release agent | Baydur 18BD101 | Covestro Polymer (China) Co. Ltd. |
| Glass fiber roving | PS 4100-2400Tex | Owens Corning Composite (China) Co. Ltd. |
| Pultrusion apparatus | Composite crawler pultrusion machine | Nanjing Loyalty Composite Equipment Manufacture Company |
| Resin-injection machine | Hydraulic Mini Link System | Magnum Venus Products |
| Sensor | T32 intelligence flat membrane pressure transmitter | Beijing Lenosensor Science and Technology Co. Ltd. |
| Peel ply | Nylon 66 peel ply 105g/$m^2$ | South Chemical Fiber Co., Ltd. |

Example 1:

The production of 3 mm * 100 mm flat sheet was taken as an example to describe the production process of the glass fiber-reinforced polyurethane pultruded sectional material/sheet material with peel ply. In addition, in this example, the cross-sectional area ratio of the inlet to the outlet of the infiltration box was 7:1; the vertical distance between the resin-injection system (30) and the inlet (5a) of the infiltration box in the pultrusion direction was 50 mm; the width of the resin-injection flow channel was 10 mm, the diameter of the hole of the flow channel was 2 mm, the length of the hole of the flow channel was 200 mm, and the gap length was 50 mm.

The resin-injection system (30), the infiltration box (5) and the mold (7) were assembled and fixed on the pultrusion platform. The 1# liquid level sensor (2) was installed at a position having a distance of 20 mm from the inlet of the infiltration box (5), and simultaneously the 2# liquid level sensor (4) was installed at a position having a distance of 150 mm from the inlet of the infiltration box(5), then the infiltration box (5) and the mold were assembled according to the drawings, and fixed on the pultrusion platform. 220 bundles of glass fiber (1) were drawn from the creel, and simultaneously two pieces of the peel ply (2a, 2b) were drawn from the creel and successively passed through the yarn guide plate/preform plate (3), the infiltration box (5) and the mold (7) together with the glass fiber (1). They were pulled forward by a traction device until the glass fibers were all drawn smoothly. The peel ply 1 (2a) was close to the upper side (5i) of the infiltration box (5), and the peel ply 2 (2b) was close to the lower side (5j) of the infiltration box (5). A heating device of the mold (7) was turned on, and the temperatures of the mold from the inlet to the outlet were successively controlled as follows: 80 °C/180 °C/190 °C. A resin-injection machine was started after the temperature became stable. In the resin-injection machine, component A (Desmodur1511L) and component B (100 parts of Baydur18BD209: 4 parts of Baydur18BD101) were continuously pumped according to the weight ratio of 100:116 to the static mixing head and injected into the infiltration box (5), at which point the liquid level sensor began to operate:

1) When 1# liquid level sensor (2) detected the resin, the sensor sent out an instruction for reducing the glue-injection frequency;

2) when 1# liquid level sensor (2) could not detect the liquid level, and simultaneously 2# liquid level sensor (4) detected the liquid level, the sensor sent an instruction of stabilizing the glue injection frequency;

3) when 2# liquid level sensor (4) could not detect the liquid level, the sensor sent an instruction of increasing the glue-injection frequency;

When the production speed was changed, 1# liquid level sensor (2) and/or 2# liquid level sensor (4) worked synchronously with the resin-injection system (30), and the stable resin supply was maintained:

1) when 1# liquid level sensor (2) detected the liquid level, the liquid level was indicated to be at a high liquid level, and the sensor sent an instruction of reducing the resin-injection velocity;
2) when 2# liquid level sensor (4) could not detect the liquid level, the liquid level was indicated to be at a low liquid level, and the sensor sent an instruction of increasing the resin-injection velocity;

As a preferred solution, a temperature sensor (6) might be installed on the infiltration box (5). The temperature sensor real-time recorded the temperature of the material at the outlet of the infiltration box (5), and a signal was simultaneously sent to the resin-injection system (30)/control system (40) to guarantee the product quality:

1) When the temperature sensor (6) detected a higher temperature, the sensor informed the resin-injection machine to turn on the resin cooling device so as to reduce the material temperature, and simultaneously informed the pultrusion line to increase the speed and reduce the resin retention;

2) When the temperature sensor detected a lower temperature, the sensor informed the resin-injection machine to turn on the resin heating device so as to reduce the resin viscosity and improve the resin wettability.

After the resin was mixed with a mixing head, the resin was injected into the resin-injection flow channel from the resin-injection ports (4a, 4b) at two sides (5m, 5n) of the infiltration box (5), the resin was uniformly injected into the infiltration box through a plurality of the flow channel holes on the resin flow channel and completely filled the infiltration box (the average resin-injection velocity was 110 g/min), so that the glass fiber (1) and the peel ply (2a, 2b) were fully infiltrated, and the resin-injection pressure in the infiltration box (5) was controlled to 0.1-15 bar. The glass fiber (1) and the peel ply (2a, 2b) infiltrated in the infiltration box (5) were continuously pulled through the mold (7) by the traction device 8 at the speed of 0.5 m/min, after being taken out of the mold, the sheet material was smooth without dry yarns, and when the obtained pultruded polyurethane composite/sectional material was knocked with metal at a position of 1 meter away from the mold, the sound was clear and crisp, indicating good infiltration and curing.
Before the obtained pultruded polyurethane composite/sectional material was further processed and used, the peel ply was removed, namely, the pultruded polyurethane composite/sectional material with a satisfactory surface condition could be obtained.
It was recorded that a pultruded polyurethane composite of 100 meters * 3 millimeters * 100 millimeters was produced, and 13 kg of the polyurethane composition was consumed.

Comparative Example 1

Except that no automatic control method was used, the same procedure and steps as those in Example 1 were used to obtain a pultruded polyurethane composite having the same density and the same size of 100 meters * 3 millimeters * 100 millimeters. It was recorded that the amount of the consumed polyurethane composition was 13.5kg.
It can be seen from the above experiment results that the automatic control method of the present invention was very suitable for the pultrusion process, and could accurately and objectively control the injection time and velocity of the raw materials in the pultrusion production process, and produce the pultruded polyurethane composite with good infiltration and curing, and at the same time, it could also save raw materials, economize manpower and material resources, and reduce the cost, and therefore it is conducive to the commercialization of related products.
In addition, the polyurethane composition of the present invention had a shorter curing time and a longer gelation time, and could be suitable for preparing a polyurethane product, in particular a large-scale polyurethane product in a more flexible manner and in a better way (for example, could be infiltrated and shaped for a longer time).
Although the present invention has been described in detail in the foregoing for the purpose of the present invention, it is to be understood that such detail is solely for the purpose of illustration and that various changes can be made by those skilled in the art without departing from the spirit and scope of the invention except as it may be limited by the claims.

## Claims

**1.** An automatic control method for preparing a pultruded polyurethane composite, comprising:

Injecting a polyurethane composition into an infiltration box (5) with a resin-injection apparatus (30) to form a

liquid level;
Acquiring liquid level information of the polyurethane composition in said infiltration box (5);
Transmitting said liquid level information to said resin-injection apparatus (30) and/or a control system (40);
Adjusting a process parameter according to said liquid level information.

2. The method according to claim 1, **characterized in that** said liquid level information comprises the liquid level information at two or more than two different positions.

3. The method according to claim 1 or 2, **characterized in that** acquiring positions of said liquid level information are an acquiring position 1 (2) and an acquiring position 2 (4) respectively, said infiltration box (5) comprises an inlet (5a), the straight-line distance between said acquiring position 1 (2) and said inlet (5a) is 0-100 mm, the straight-line distance between said acquiring position 2 (4) and said inlet (5a) is 110-300 mm, preferably 120-250 mm, more preferably 130-200 mm.

4. The method according to any of claims 1-3, **characterized in that** the method also comprises:
Pre-storing a plurality of correspondences between historical liquid level information and historical process parameter, and adjusting the process parameter according to the acquired liquid level information and said correspondence between historical liquid level information and historical process parameter.

5. The method according to any of claims 1-4, **characterized in that** said liquid level information is acquired from at least one sensor, preferably acquired from two sensors.

6. The method according to any of claims 1-5, **characterized in that** the method also comprises acquiring temperature information in the infiltration box (5), and transmitting said temperature information to the resin-injection apparatus (30) and/or the control system (40), said resin-injection apparatus (30) and/or said control system (40) adjusting the process parameter, preferably a resin-injection temperature, according to said temperature information.

7. The method according to any of claims 1-6, **characterized in that** the method also comprises:

Placing at least one peel ply (2a, 2b) and at least one fiber-reinforced material (1) in the infiltration box (5); wherein, said peel ply (2a, 2b) at least partly covers said fiber-reinforced material (1);
infiltrating said fiber-reinforced material (1) with a polyurethane composition via a part of the fiber-reinforced material (1) that is not covered by the peel ply (2a, 2b);
pulling the infiltrated fiber-reinforced material (1) and the peel ply (2a, 2b) through a mold (7), solidifying and shaping to produce said pultruded polyurethane composite.

8. The method according to claim 7, **characterized in that** said at least one peel ply (2a, 2b) is two pieces of the peel ply (2a, 2b), said two pieces of the peel ply (2a, 2b) are placed on two opposite inner sides (5i, 5j) of the infiltration box (5) respectively, and said fiber-reinforced material (1) is located between the two pieces of the peel ply (2a, 2b).

9. The method according to any of claims 1-8, **characterized in that** the method also comprises pulling the infiltrated fiber-reinforced material (1) through a mold (7) at a velocity of 0.2-2 m/min, preferably 0.2-1.5 m/min, and said polyurethane composition is injected into said infiltration box (5) at a velocity of 30-2000 g/min, preferably 40-1500 g/min, more preferably 60-1200 g/min.

10. A device for the automatic control method for preparing the pultruded polyurethane composite according to any of claims 1-9, comprising:
a resin-injection apparatus (30), an infiltration box (5) comprising an inlet (5a) and an outlet (5b) and at least one information-acquiring device (2, 4).

11. The device according to claim 10, **characterized in that** said information-acquiring device (2, 4) is two information-acquiring devices (2, 4), an information-acquiring device 1 (2) is placed above the infiltration box (5) and at a position having a straight-line distance from the inlet (5a) of said infiltration box (5) of 0-100 mm, and an information-acquiring device 2 (4) is placed above the infiltration box (5) and at a position having a straight-line distance from the inlet (5a) of said infiltration box (5) of 110-300 mm, preferably 120-250 mm, more preferably 130-200 mm.

12. The device according to claim 10 or 11, **characterized in that** said information-acquiring device (2, 4) is two sensors.

**13.** A method for preparing a polyurethane composite, comprising the automatic control method for preparing the pultruded polyurethane composite according to any of claims 1-9.

**14.** The method according to claim 13, **characterized in that** said method for preparing the pultruded polyurethane composite comprising the automatic control method, compared to the method for preparing the pultruded polyurethane composite not comprising the automatic control method, has a reduction of ≥ 1%, preferably≥ 2%, more preferably≥ 3% in the used amount of the polyurethane composition.

**15.** A computer-readable storage medium having instructions stored therein, **characterized in that** it, when executed by a processor, causes the processor to perform the method according to any of claims 1-9.

Fig. 1

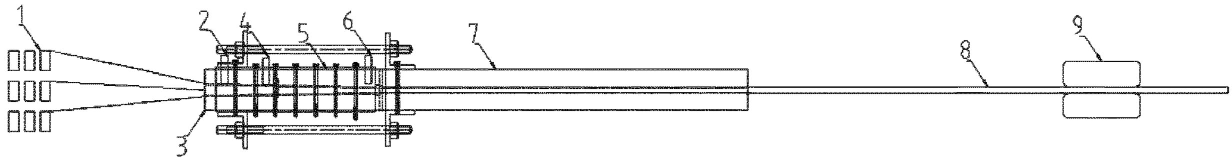

Fig. 2

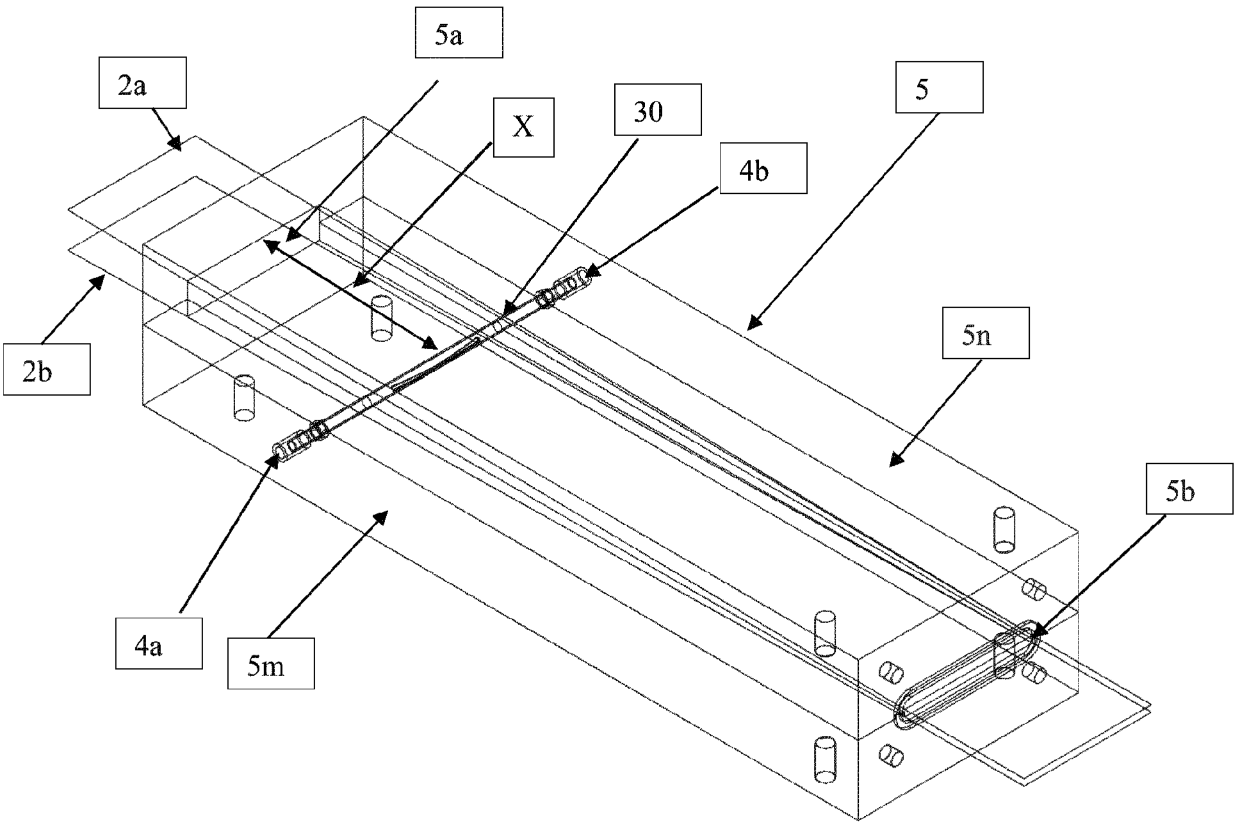

Fig. 3

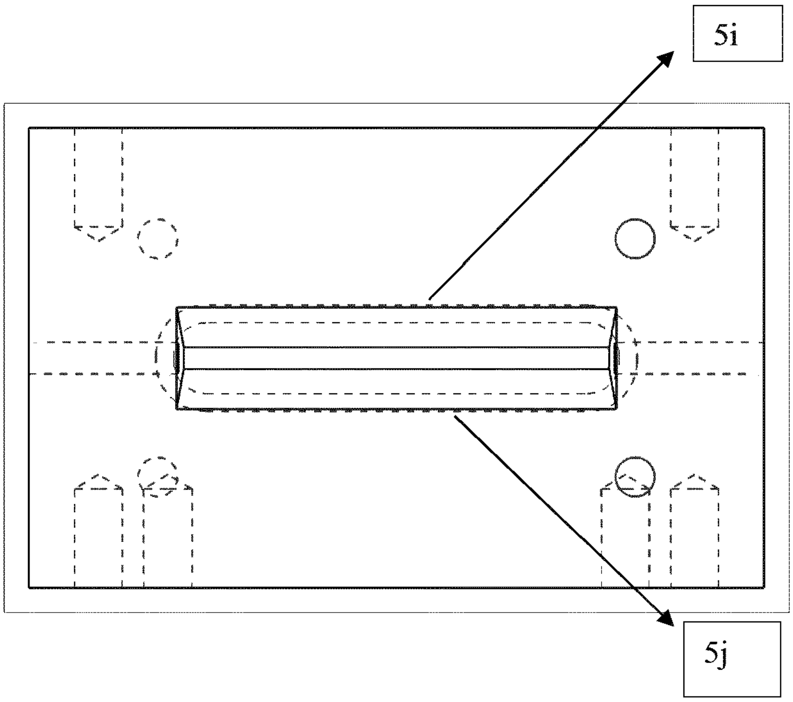


Fig. 4

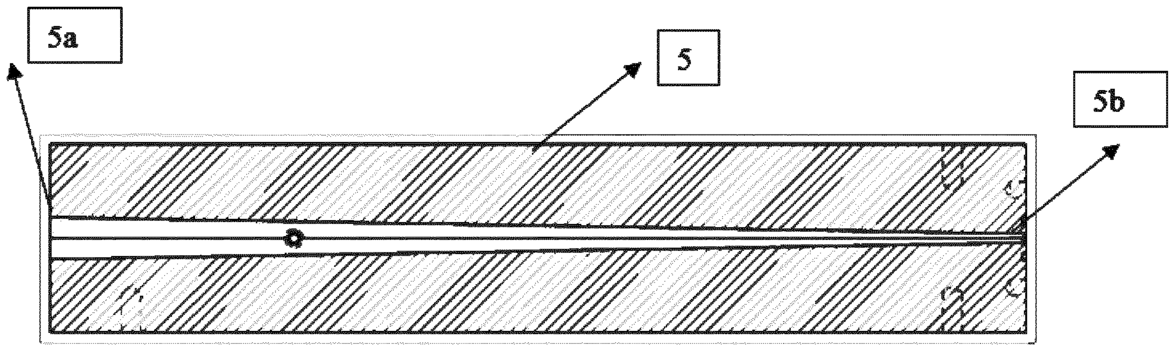

Fig. 5

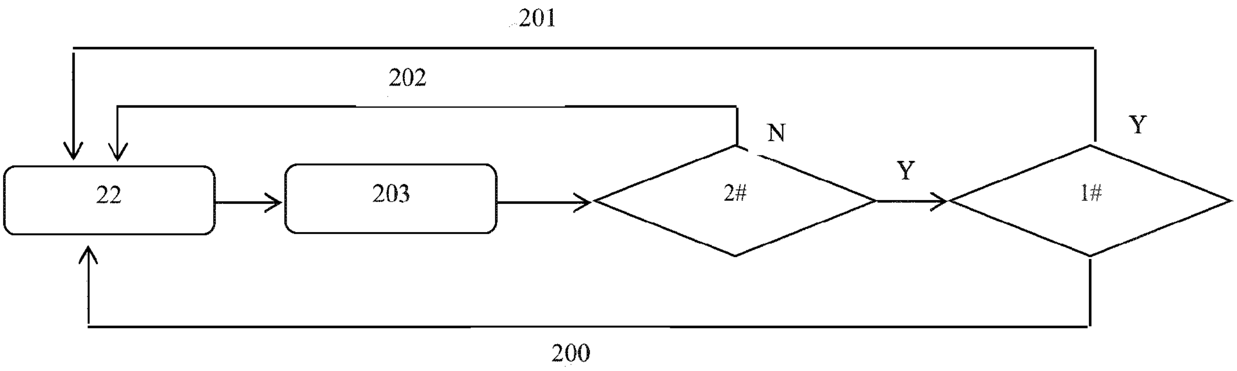

Fig. 6

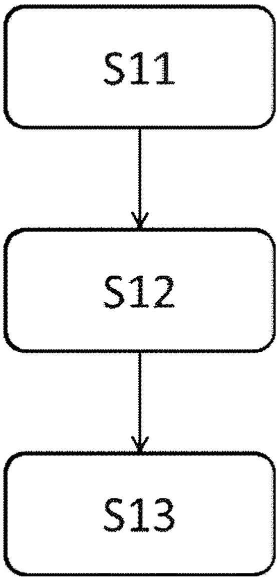


Fig. 7

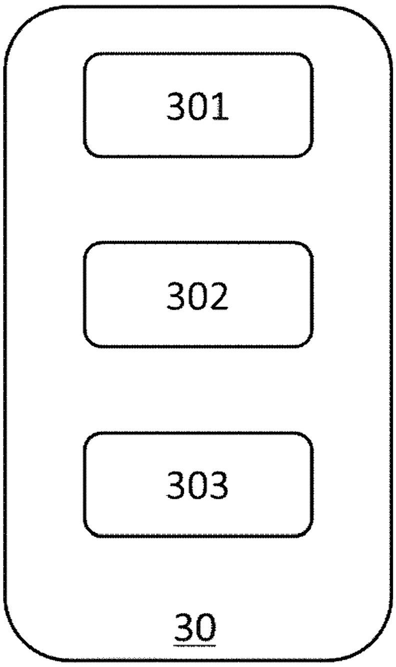

Fig. 8

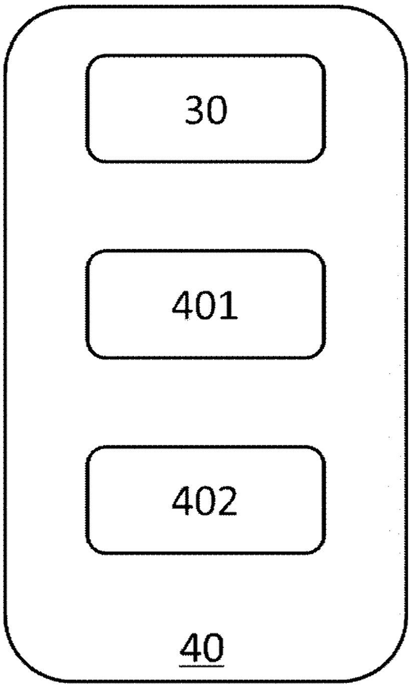

Europäisches Patentamt
European Patent Office
Office européen des brevets

# EUROPEAN SEARCH REPORT

Application Number
EP 21 18 2668

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D<br><br>Y | CN 109 986 810 A (JIANGSU TOP COMPOSITE TECH CO LTD) 9 July 2019 (2019-07-09)<br>* claims 1,6,7,8; figure 4 *<br>----- | 1-6,9-15<br><br>7,8 | INV.<br>B29B15/12<br>B29C70/52 |
| X<br><br><br>Y | WO 2012/139582 A1 (VKR HOLDING AS [DK]; NOERGAARD HENRY [DK])<br>18 October 2012 (2012-10-18)<br>* claims 1,4; figure 1 *<br>----- | 1-6,9-15<br><br><br>7,8 | |
| X | CN 109 605 781 B (SUNWELL JIANGSU CARBON FIBER COMPOSITE CO LTD)<br>5 February 2021 (2021-02-05)<br>* claim 1; figure 1 *<br>----- | 1-15 | |
| Y | WO 2021/037817 A1 (COVESTRO INTELLECTUAL PROPERTY GMBH & CO KG [DE])<br>4 March 2021 (2021-03-04)<br>* figure 1; example 1 *<br>----- | 7,8 | |

TECHNICAL FIELDS SEARCHED (IPC)

B29B
B29C

1

The present search report has been drawn up for all claims

| Place of search | Date of completion of the search | Examiner |
|---|---|---|
| Munich | 7 December 2021 | Jouannon, Fabien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 21 18 2668

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2021

| Patent document cited in search report | Publication date | Patent family member(s) | Publication date |
| --- | --- | --- | --- |
| CN 109986810 A | 09-07-2019 | NONE | |
| WO 2012139582 A1 | 18-10-2012 | DK 2697042 T3 | 06-11-2017 |
| | | EP 2697042 A1 | 19-02-2014 |
| | | PL 2697042 T3 | 31-01-2018 |
| | | WO 2012139582 A1 | 18-10-2012 |
| CN 109605781 B | 05-02-2021 | NONE | |
| WO 2021037817 A1 | 04-03-2021 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 109986810 A
- CN 209869449 U
- CN 104974502 A


### Non-patent literature cited in the description


- Makromolekulare Stoffe. Houben Weyl, Methoden der Organischen Chemie. Georg Thieme Verlag, 1963, vol. XIV/2, 17
- **LIU YIJUN.** Manual of Polyurethane Raw Materials and Additives. 01 April 2005
- **LIU HOUJUN.** Polyurethane Elastomer. August 2012